# EUROPEAN PATENT SPECIFICATION

(11) **EP 0 480 358 B1**
(45) Date of publication and mention of the grant of the patent: **14.12.1994**
(21) Application number: 91117082.7
(22) Date of filing: 08.10.1991
(51) Int. Cl.: F16D 55/40, F16D 65/16, F16D 65/84, B64C 25/42

(54) **Aircraft brake**
Flugzeugbremse
Frein pour avion

(30) Priority: 09.10.1990 US 594471
(43) Date of publication of application: 15.04.1992
(73) Proprietor: THE B.F. GOODRICH COMPANY, Akron Ohio 44313-1799 (US)
(72) Inventor: Edmisten, Frank David, Troy, Ohio 45373 (US)
(74) Representative: Selting, Günther, Dipl.-Ing.

(56) References cited:
- FR-A- 2 311 966
- GB-A- 715 233
- GB-A- 902 093
- US-A- 2 304 774
- US-A- 2 635 714
- US-A- 4 815 359

## Description

This invention relates to a friction aircraft braking system and more particularly to a new and improved multiple actuator for an aircraft wheel and brake assembly.

During the braking of an aircraft, a plurality of alternately splined stator and rotor discs are brought into sliding frictional engagement with each other generating considerable heat within the braking elements and the supporting structure. The stator and rotor discs, which can be made of metal or carbon, can withstand the high heat build-up in such brakes, with heat shields provided for the adjacent structures to limit heat absorption. For the immediate adjacent structures such as the multiple actuating mechanisms of the plural pistons and their cylinders, insulators are used to limit the heat absorption. The supporting structure for the brake actuating pistons and cylinders must be designed to be lightweight as other component parts to enhance the overall need to keep the weight manageable and fuel efficient.

The present invention recognizes that the interfacing between the pressure plate and the forwardly disposed faces of the pistons that are circumferentially spaced around the piston housing are parallel surfaces and that under severe braking forces, they encounter tremendous stress forces that tend to deflect the outer radial portions of the piston housing to cook their corresponding pistons in their respective housings. This action causes side loading and uneven wear of the piston and its supporting structure including the pressure plate. Bending action increases as the brake discs wear and the piston elements must extend axially outward a greater distance for full brake application.

The bending action and resultant side loading is especially harmful to assemblies that have automatic adjusters built into the pistons, due to excessive wear on close clearance adjuster components, and increased difficulty in maintaining an effective seal of hydraulic fluid.

A friction aircraft brake including the features of the preamble of the main claim is known from US-A-4 815 359 and FR-A-2 311 966 each. Moreover, in GB-A-715 233 a multiple disc brake for vehicles, track-laying vehicles, tanks and other heavy vehicles is disclosed. The pressure plate of this known disc brake is pressed against the stack of discs by means of a stem having a rounded end received in a corresponding partially spherical recess in a pistion.

It is the object of the present invention to provide a multiple disc brake assembly including means for maintaining the alignment of the forwardly disposed portions of the piston or piston heads with the pressure plate regardless of the piston housing deflection, thereby reducing the effects of side loading.

The present invention is directed to an aircraft multiple disc brake assembly having a wheel member with axial splines engaging rotor discs which are interleaved with stator discs that are splined to a torque tube. The torque tube is secured to a hub and piston housing which in turn supports piston means including a plurality of circumferentially spaced pistons whose head has an inner cap or disc and an outer cap or disc with mating portions of spherical configuration to allow relative pivoting action between the caps to maintain parallel faces of the outer cap with the adjacent face of a stator disc. This ensures maintaining the alignment of the forwardly disposed portions of the piston or piston heads with the pressure plare regardless of the piston housing deflection, thereby reducing the effects of side loading. An additional benefit of this construction is improved distribution of actuation force into the heat sink providing more even wear and reduced temperature differential across heat sink wear surfaces. This will improve disc utilization resulting in longer use between overhauls and improved performance for high-energy stops.

A preferred embodiment of the present invention is now disclosed in more detail with reference to the drawing in which
Fig. 1 is a fragmentary cross-sectional view of an aircraft brake assembly showing a piston housing and piston assembly as mounted on an aircraft installation,
Fig. 2 is a front elevational view of the brake assembly taken on line 2-2 of Fig. 1 showing the piston housing;
Fig. 3 is an enlarged cross-sectional view of a piston and cylinder assembly;
Fig. 4 is a cross-sectional view of a piston and cylinder assembly having the piston head engaging the adjacent stator disc or pressure plate;
Fig. 5 is a cross-sectional view of a piston and cylinder assembly similar to that shown in Fig. 4 but with piston head extended axially outwardly a greater distance to illustrate wear and take up due to brake disc wear;
Fig. 6 is an enlarged cross-sectional view of the forwardly disposed portion of the piston and cylinder assembly engaging the pressure plate;
Fig. 7 is a schematic side elevational view similar to Fig. 1 illustrating the principal of the invention showing the bending of the piston housing relative to the pressure plate on full extension of the piston assembly;
Fig. 8 is a side elevational view partly in section of the inner and outer cap of a piston head in exploded view;
Fig. 9 is a front elevational view of the inner cap taken on line 9-9 of Fig. 8;
Fig 10 is a front elevational view of the outer cap partly in cross-section taken on line 10-10 of Fig. 8.

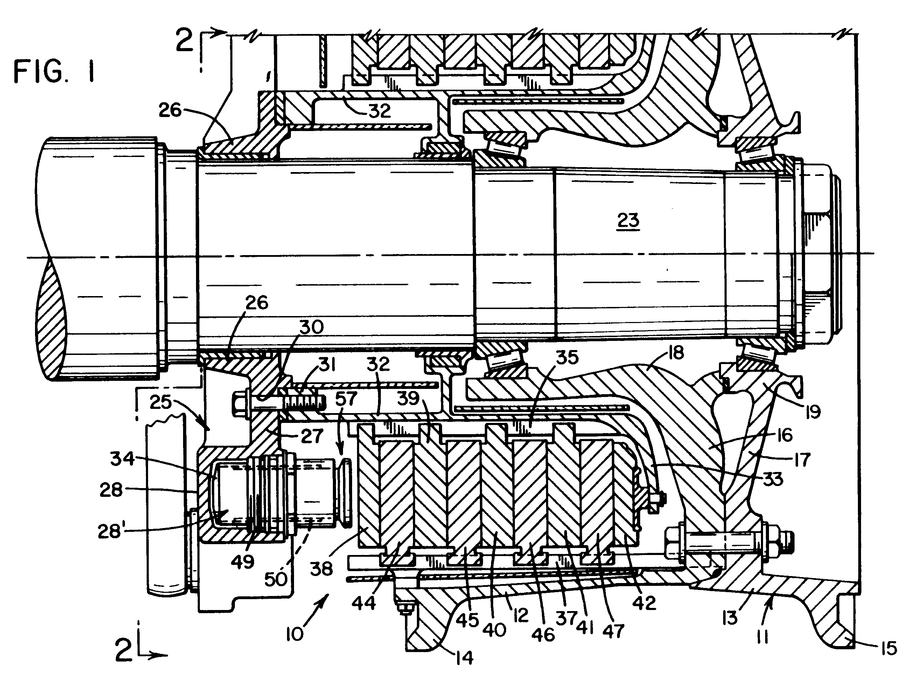

Referring to the drawings, wherein like reference numerals designate like or corresponding parts throughout the several views, there is shown in Fig. 1 a friction brake mechanism 10 for use with a cylindrical wheel 11 having matching wheel sections 12 and 13. Each of the wheel sections 12 and 13 has a rim member 14 and 15, web members 16 and 17, and hub members 18 and 19. The wheel sections 12 and 13 are fastened together by suitable bolts disposed in aligned bores within web members 16 and 17 to form an integral unit herewith.

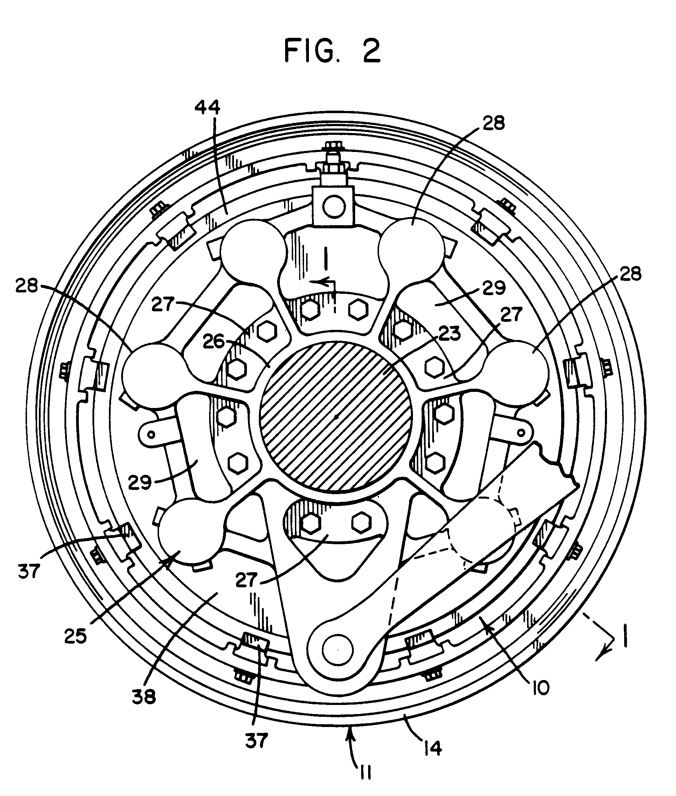

The hub members 18 and 19 are supported for rotation on suitable bearings, which are mounted on a nonrotatable axle member or axle means 23 having a central axis. Mounted on axle member 23 is a carrier 25, which carrier 25 has an inner hub or rim portion 26, a radially extending flange portion 27 and a plurality of circumferential cylinders or cylinder housings 28. Such carrier 25 is often referred to as a piston housing or a piston support member. The carrier or piston housing 25 has a plurality of spaced apart openings 29 as shown in Fig. 2 to reduce overall weight. Flange 27 of the piston housing has a plurality of circumferentially spaced bores 30 for securing such flange to an annular hub 31 of a cylindrical torque tube member or torque tube 32, which torque tube member 32 has an annular and radially outwardly extending reaction plate or reaction member 33. The reaction plate 33 may be made integral with the torque tube member 32 or may be made as a separate annular piece and suitably connected to the torque tube or torque tube member 32.

Torque tube 32 has a plurality of circumferentially spaced splines or spline members 35 which are axially extending. Wheel section 12 has a plurality of circumferentially spaced ribs or splines 37 on its inner peripheral surface, which may be cast therein or may be machined to provide an integral type rib or spline for the brake assembly.

Spline members or ribs 35 support an axially nonrotatable pressure plate or end disc 38 and inner nonrotatable discs 39, 40, and 41. All of such (stator discs) nonrotatable discs 38, 39, 40 and 41 have slotted openings at circumferentially spaced locations on the inner periphery for captive engagement by the spline members 35 as is old and well known in the art. Such discs 38, 39, 40, and 41 constitute the stators of the friction brake 10. An annular disc or annular braking element 42 is suitably connected to the reaction plate 33 and acts in concert with the stator discs 38, 39, 40 and 41.

A plurality of axially spaced discs 44, 45, 46 and 47 interspaced or interleaved between the stator discs 38 through 42, have a plurality of circumferentially spaced openings along their outer periphery for engagement by the corresponding ribs 37 as is old and well known in the art thereby forming the rotor discs for the friction brake 10. All of the nonrotatable discs 38 through 42 and rotatable discs (44 through 47) may be made from a suitable brake material such as metal, steel or other wear-resistant material for withstanding high temperatures and providing a heat sink. The number of discs may be varied as is necessary for the application involved. The respective stator discs and rotor discs that have the circumferentially spaced openings on the inner and outer periphery may accommodate reinforcing inserts to provide reinforcement to the walls of such slotted openings and to enhance the life of such slots. Such reinforcing inserts are also referred to as drive clips.

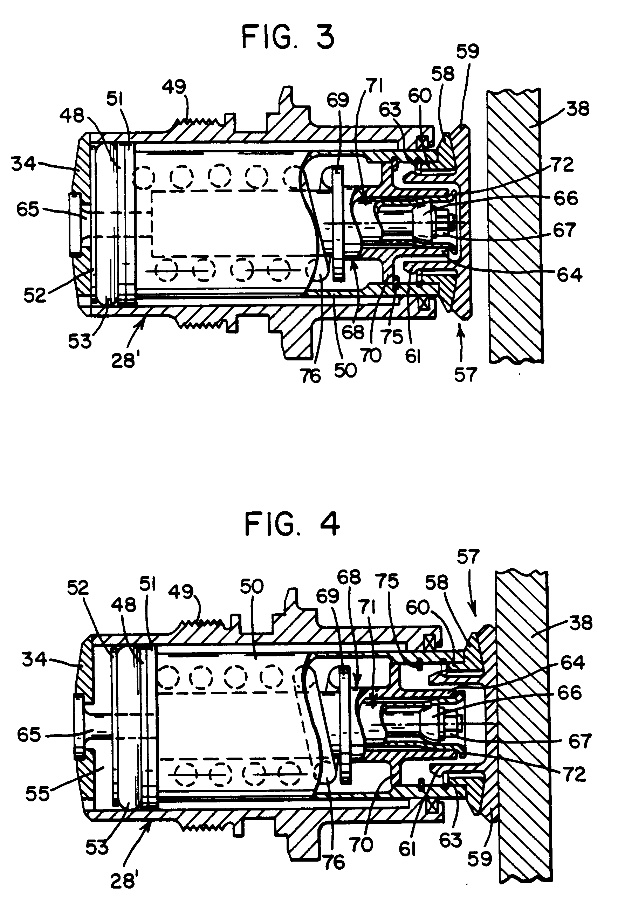

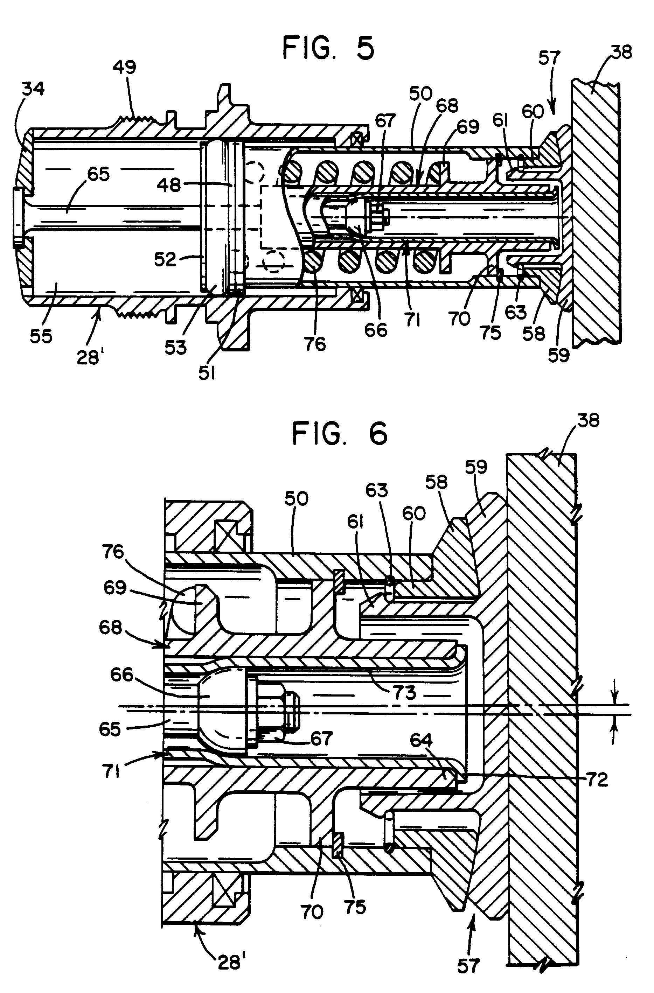

The actuating mechanism for the brake includes the piston housing 25 which contains the circumferentially spaced cylinder housings 28, which as shown in Fig. 1 is integral with the flange 27 and rim portion or hub 26. The cylinder housings 28 receive a piston cylinder 28' which as shown in Fig. 3 is threaded on its outer surface as at 49 for convenience of assembling into the cylindrical housing 28. Only one piston cylinder 28' will be described. The cylinder 28' has an end wall 34 with a sleeve 50 slidably mounted therein. One end of sleeve 50 has a pair of spaced flanges 51 and 52 to receive therebetween a packing 53 which slidingly engages the interior wall of the piston cylinder to define a piston chamber 55 between the end wall 34 of such cylinder 28' and the end of the sleeve 50 containing flange 52 as shown in Figs. 4 and 5. Such flanges 51 and 52 along with the sleeve 50 defines a portion of the piston. As shown in Figs. 3 and 4, a packing back-up ring 48 is mounted between flange 51 and the packing ring 53. The one flange 52 is an end flange or end plate member.

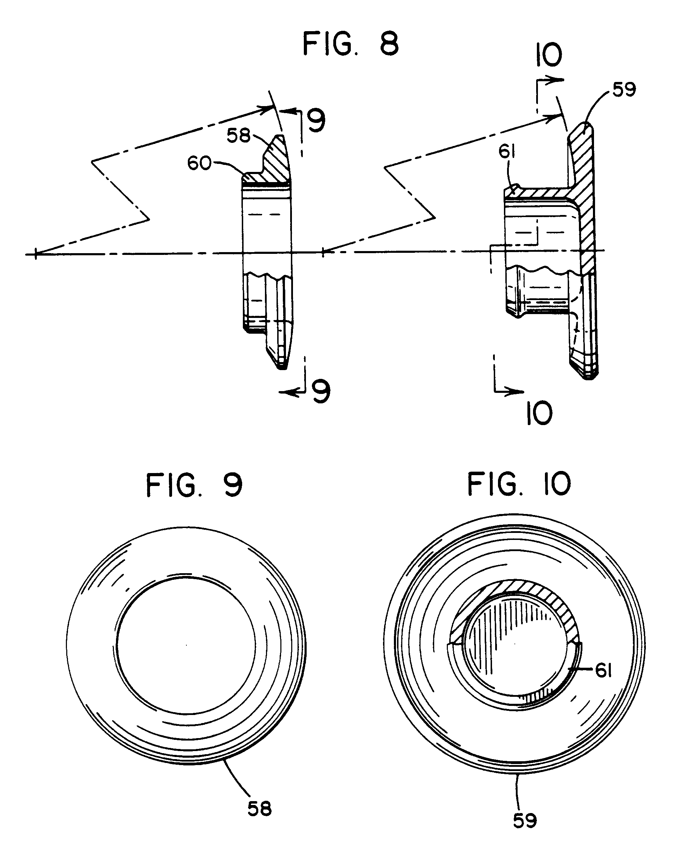

The other end of sleeve 50 has a piston head 57 with a rearwardly disposed or inner cap 58 and a forwardly disposed or outer cap 59*. Cap 58 has a reduced annular portion 60 that is received by the sleeve 50. Cap 59 has a reduced annular portion 61 that is received within annular portion 60. The respective mating surfaces of the cap 58 and 59 are spherical in contour or shape to permit a movement of the outer cap 59 relative to the inner cap 58 as to be described. The annular portion 61 of cap 59 is retained relative to the annular portion 60 of cap 58 by a retaining ring 63 to facilitate the displacement of the outer cap 59 relative to inner cap 58. The sleeve 50 along with end plate member 51 and piston head 57 (caps 58, 59) define a piston means which is slidably positioned within the piston cylinder 28'. The chamber 55 is suitably connected to an inlet port and an outlet port controlled by valve means in a manner old and well known in the art, whereby pressurization of chamber 55 controls the movement of the piston or piston means. Suitably secured to the end wall 34 of cylinder or piston cylinder 28' is one end of a longitudinally extending rod 65, which rod 65 extends into the interior of the sleeve 50 through a bore in the end flange 51 or plate member. The other end of rod 65 has a hardened ball 66 secured thereto as by a nut 67. A tubular member 68 with coaxially spaced flanges 69 and 70 is concentrically mounted within sleeve 50 and has its one end 64 located within the reduced annular portion 61 of outer cap 59. A deformable tube 71 has its one end 72 suitably connected as by swaging to the one end 64 of tubular member 68 as clearly shown in Figs. 3, 4 and 5. The ball 66 is closely received by the interior bore 73 of the deformable tube 71.
* (for this and the following see Figures 3 and 6, as well as the exploded view of the piston head in Figures 8, 9 and 10)

The one flange 70 of tubular member 68 abuttingly engages an annular ring or stop ring 75 that is mounted within the bore of piston cylinder 28'. Such stop ring 75 limits the extreme outward movement of the tubular member 68 relative to the piston. A spring 76 encircles tubular member 68, having one end abutting flange 69 while the other end abutting the annular flange 51 on the piston to thereby act as a means for maintaining the piston's outer disc 59 in the retracted position relative to the cylinder 28' upon exhausting the pressurized fluids within chamber 55. The piston head 57 is movable into engagement with stator disc 38 upon pressurization of chamber 55. After repeated applications of the piston and piston head 57 on the stator disc 38 and other interleaved brake discs, the brake discs will wear and then require the piston and piston head 57 to travel further to apply the brake discs against each other and against the end stator disc 42. To compensate for this wear, the piston and piston head 57 in Fig. 4 shows the ball 66 on rod 65 as substantially adjacent to the piston head 57 while Fig. 5 shows the ball 66 as having traveled a substantial distance within deformable tube 71 which allows the piston and piston head 57 to move outwardly on rod 65 a substantial distance (which action defines the condition of substantial wear of the stator and rotor brake discs). Further wear of the brake discs would allow the piston and piston head 57 to move a little farther than that shown in Fig. 5 wherein hardened ball 66 would deform tube 71 slightly more than that shown, which action allows tubular member 68 and its accompanying deformable sleeve to move rightward as seen in Fig. 5. This action of the deformable sleeve 71 along with ball 66 within the piston is a wear adjuster means.

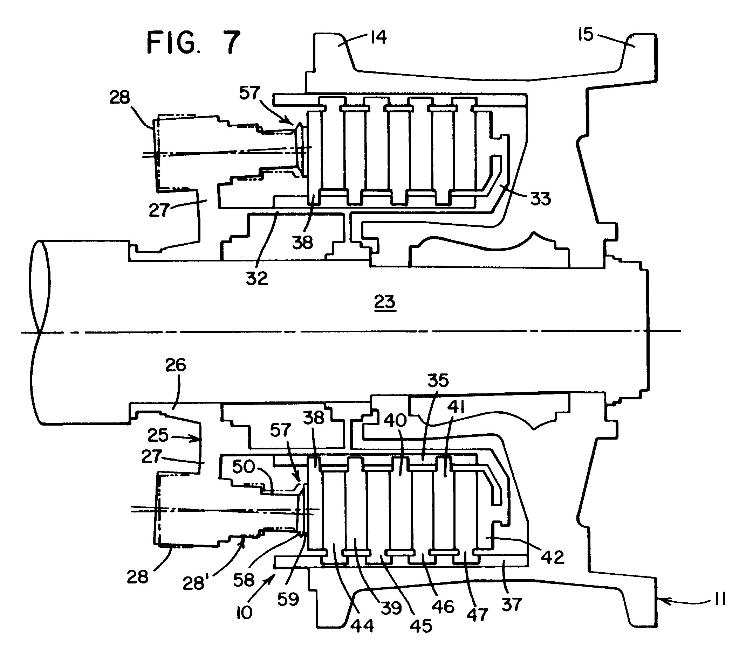

Fig. 7 illustrates the situation where there has been a condition of substantial wear of the stator and rotor discs, causing the deformable tube 71 to be deformed by ball 66 to cause the piston head 57 (caps 58 and 59) to extend a substantial distance from the piston cylinder 28', which during a braking action will cause a deformation or bending of the piston support member or piston housing 25. In the structure of the instant invention, because of the unique spherical mating surfaces of the inner cap 58 with the concave surface of the outer cap 59, the outer cap 59 will pivot slightly on such inner cap to assure parallel alignment of the outer cap's surface with the pressure plate regardless of the piston housing's deflection to prevent the cocking of the sleeve 50 within the cylinder 28' to prevent side loading and uneven wear on these parts which otherwise would occur and would occur with a greater degree. With the structure of the described invention, the force distribution across the heat sink is improved not only from a reduction in side loading but also because the force is spread out due to the spherical surface being concave (outer disc 59) relative to the heat sink of the interleaved stator and rotor discs.

## Claims

1. Multiple disc brake assembly for an aircraft, comprising
- an axle means (23) with a central axis,
- a cylindrical wheel member (11) journaled on said axle means (23), said cylindrical wheel member (11) having an inner peripheral circumferentially extending portion (12,13) and a radially disposed rim portion (16,17) for mounting on said axle means (23) for rotation there-on, said inner peripheral portion (12,13) having a plurality of circumferentially spaced splines (37),
- a plurality of axially spaced rotor brake discs (44-47) extending around said axle means (23) and keyed to said splines (37) for rotation therewith, said axle means (23) having a hub means (31),
- a torque tube (32) mounted on said hub means (31), said torque tube (32) having a plurality of axially extending ribs (35),
- a plurality of stator brake discs (38-41) with circumferentially spaced slots engaging said ribs (35) for axial movement of said stator discs (38-41), said rotor brake discs (44-47) being interleaved between said stator brake discs (38-41),
- a piston support member (25) secured to said hub means (31), a plurality of circumferentially spaced cylinders (28') being mounted on said piston support member (25), each cylinder (28') having a piston (50) slidably mounted therein, one end of each piston (50) being cooperative with said cylinder (28') thereof to define a piston chamber (55) which is selectively pressurized,
**characterized in** that
- the other end of each piston (50) has a pair of discs (58,59) with mating surfaces and
- said mating surfaces of said discs (58,59) are spherically contoured to permit a tilting relative to each other.

2. Brake assembly according to claim 1 characterized in that said discs (58,59) are heat insulator means operative to shield heat energy away from said piston chamber (55).

3. Brake assembly according to claim 1 or 2 characterized in that one of said discs (58,59) is an inner disc and the other one of said discs (58,59) is an outer disc, and said mating surface of said outer disc (59) to said inner disc (58) is concave to spread out the force loading on a braking action.

4. Brake assembly according to any one of claims 1 to 3 characterized in that said mating surfaces of said discs (58,59) have a dry film lubricant there-on.

5. Brake assembly according to any one of claims 1 to 4 characterized in that wear adjuster means are mounted in each of said pistons (50).

6. Brake assembly according to claim 5 characterized in that said wear adjuster means has a rod member (65) extending through said one end of said piston (50) which is secured to said cylinder (28'), and said wear adjuster means is operative upon pressurization of said piston chamber (55) to extend said discs (58,59) a substantial distance beyond said cylinder (28') unde substantial wear of said rotor and stator brake discs (44-47,38-41).

7. Brake assembly according to any one of claims 1 to 6 characterized in that said outer disc (59) and said inner disc (58) are provided with an annular portion (60,61) each, said inner disc (58) being carried by said piston (50) and the annular portion (61) of said outer disc (59) being received within the annular portion (60) of said inner disc (58).

8. Brake assembly according to any one of claims 1 to 6, characterized in that said inner and outer discs (58,59) are formed as inner and outer caps, respectively having mating surfaces and reduced annular portions (60,61) received by one another.

9. Brake assembly according to any one of claims 1 to 8 characterized in that said mating surfaces are annular convex and concave mating surfaces, respectively.

10. Brake assembly according to any one of claims 1 to 9 characterized in that said piston (50) is provided as an elongated sleeve carrying at its one axial end a piston head (57) comprising the inner and outer discs (58,59).

## Patentansprüche

1. Mehrscheibenbremsanordnung für ein Flugzeug, mit
- einer Achseinrichtung (23) mit einer Mittelachse,
- einem auf der Achseinrichtung (23) gelagerten zylindrischen Radteil (11), das einen umfangsmäßig verlaufenden Innenumfangsbereich (12,13) und einen radial angeordneten Felgenbereich (16,17) zur Befestigung an der Achseinrichtung (23) zur Drehung auf dieser aufweist, wobei der Innenumfangsbereich (12,13) mehrere umfangsmäßig beabstandete Vorsprünge (37) aufweist,
- mehreren axial voneinander beabstandeten Rotorbremsscheiben (44-47), die sich um die Achseinrichtung (23) erstrecken und mit den Vorsprüngen (37) zur Drehung mit diesen verzahnt sind, wobei die Achseinrichtung (23) eine Nabeneinrichtung (31) aufweist,
- einem an der Nabeneinrichtung (31) angebrachten Drehwiderstandselement (32), wobei das Drehwiderstandselement (32) mehrere axial verlaufende Rippen (35) aufweist,
- mehreren Statorbremsscheiben (38-41) mit umfangsmäßig beabstandeten Schlitzen, die mit den Rippen (35) zur Axialbewegung der Statorscheiben (38-41) zusammengreifen, wobei die Rotorbremsscheiben (44-47) zwischen den Statorbremsscheiben (38-41) angeordnet sind,
- einem an der Nabeneinrichtung (31) befestigten Kolbenabstützteil (25), wobei mehrere umfangsmäßig beabstandete Zylinder (28') an dem Kolbenabstützteil (25) angebracht sind, jeder Zylinder (28') einen darin gleitend angebrachten Kolben (50) aufweist, ein Ende jedes Kolbens mit seinem Zylinder (28') zusammenwirkt, um eine Kolbenkammer (55) zu bilden, die selektiv mit Druck beaufschlagt wird,
**dadurch gekennzeichnet,** daß
- das andere Ende jedes Kolbens (50) zwei Scheiben (58,59) mit Paßflächen aufweist und
- die Paßflächen der Scheiben (58,59) eine sphärische Kontur aufweisen, um ein Kippen relativ zueinander zuzulassen.

2. Bremsanordnung nach Anspruch 1, dadurch gekennzeichnet, daß die Scheiben (58,59) Wärmeisolatoreinrichtungen sind, die als Abschirmung der Kolbenkammer (55) gegenüber Wärmeenergie wirksam sind.

3. Bremsanordnung nach Anspruch 1 oder 2, dadurch gekennzeichnet, daß eine der Scheiben (58,59) eine Innenscheibe und die andere der Scheiben (58,59) eine Außenscheibe ist, und die Paßfläche der Außenscheibe (59) zu der Innenscheibe (58) konkav ist, um die beim Bremsen auftretende Kraftbelastung zu verteilen.

4. Bremsanordnung nach einem der Ansprüche 1 bis 3, dadurch gekennzeichnet, daß auf den Paßflächen der Scheiben (58,59) ein Trockenschmiermittel angeordnet ist.

5. Bremsanordnung nach einem der Ansprüche 1 bis 4, dadurch gekennzeichnet, daß in jedem der Kolben (50) Verschleißverstelleinrichtungen angebracht sind.

6. Bremsanordnung nach Anspruch 5, dadurch gekennzeichnet, daß die Verschleißverstelleinrichtung ein sich durch ein Ende des Kolbens (50) erstreckendes Stabteil (65) aufweist, das an dem Zylinder (28') befestigt ist und bei Druckbeaufschlagung der Kolbenkammer (55) derart arbeitet, daß es die Scheiben (58,59) unter wesentlichem Verschleiß der Rotor- und Statorbremsscheiben (44-47,38-41) eine wesentliche Strecke über den Zylinder (28') hinaus ausdehnt.

7. Bremsanordnung nach einem der Ansprüche 1 bis 6, dadurch gekennzeichnet, daß die Außenscheibe (59) und die Innenscheibe (58) jeweils mit einem ringförmigen Bereich (60,61) versehen sind, wobei die Innenscheibe (58) von dem Kolben (50) getragen ist und der ringförmige Bereich (61) der Außenscheibe (59) in dem ringförmigen Bereich (60) der Innenscheibe (58) aufgenommen ist.

8. Bremsanordnung nach einem der Ansprüche 1 bis 6, dadurch gekennzeichnet, daß die Innen- und Außenscheiben (58,59) als innere bzw. äußere Kappen mit Paßflächen und einander aufnehmenden reduzierten ringförmigen Bereichen (60,61) ausgebildet sind.

9. Bremsanordnung nach einem der Ansprüche 1 bis 8, dadurch gekennzeichnet, daß die Paßflächen ringförmige konvexe bzw. konkave Paßflächen sind.

10. Bremsanordnung nach einem der Ansprüche 1 bis 9, dadurch gekennzeichnet, daß der Kolben (50) als längliche Hülse ausgebildet ist, die an ihrem einen axialen Ende einen die Innen- und Außenscheiben (58,59) aufweisenden Kolbenkopf (57) trägt.

## Revendications

1. Ensemble de frein à disques multiples pour aéronef, comprenant
- un moyen d'essieu (23) avec un axe central,
- un élément de roue cylindrique (11) mis en tourillon sur ledit moyen d'essieu (23), ledit élément de roue cylindrique (11) comportant une partie intérieure périphérique s'étendant selon la circonférence (12, 13) et une partie de jante (16, 17) disposée radialement permettant de le monter sur ledit moyen d'essieu (23) pour rotation sur celui-ci, ladite partie intérieure périphérique (12, 13) comportant une pluralité de cannelures (37) espacées selon la circonférence,
- une pluralité de disques rotor de frein espacés axialement (44 à 47) s'étendant autour dudit moyen d'essieu (23) et calés sur lesdites cannelures (37) pour rotation avec celles-ci, ledit moyen d'essieu (23) comportant un moyen de moyeu (31),
- un tube de couple (32) monté sur ledit moyen de moyeu (31), ledit tube de couple (32) comportant une pluralité de nervures (35) s'étendant axialement,
- une pluralité de disques stator de frein (38 à 41) comportant des fentes espacées selon la circonférence coopérant avec lesdites nervures (35) pour le déplacement axial desdits disques stator (38 à 41), lesdits disques rotor de frein (44 à 47) étant intercalés entre lesdits disques stator de frein (38 à 41),
- un élément de support de pistons (25) fixé audit moyen de moyeu (31), une pluralité de cylindres (28') espacés selon la circonférence étant montés sur ledit élément de support de pistons (25), chaque cylindre (28') comportant un piston (50) monté avec faculté de coulissement dans celui-ci, une première extrémité de chaque piston (50) coopérant avec ledit cylindre (28') de celui-ci pour définir une chambre de piston (55) qui est mise sous pression de manière sélective,
caractérisé en ce que,
- l'autre extrémité de chaque piston (50) comprend une paire de disques (58, 59) comportant des surfaces d'accouplement, et
- lesdites surfaces d'accouplement desdits disques (58, 59) sont de profil sphérique de manière à permettre une inclinaison relative de l'une par rapport à l'autre.

2. Ensemble de frein selon la revendication 1, caractérisé en ce que lesdits disques (58,59) sont des moyens d'isolation thermique effectifs à protéger ladite chambre de piston (55) de l'énergie calorifique.

3. Ensemble de frein selon la revendication 1 ou 2, caractérisé en ce que l'un desdits disques (58, 59) est un disque intérieur et l'autre desdits disques (58, 59) est un disque extérieur et ladite surface d'accouplement dudit disque extérieur (59) audit disque intérieur (58) est concave afin de répartir l'application de la force lors d'une action de freinage.

4. Ensemble de frein selon l'une quelconque des revendications 1 à 3, caractérisé en ce que lesdites surfaces d'accouplement desdits disques (58, 59) comportent un lubrifiant sec sur celles-ci.

5. Ensemble de frein selon l'une quelconque des revendications 1 à 4, caractérisé en ce que des moyens de rattrapage d'usure sont montés dans chacun desdits pistons (50).

6. Ensemble de frein selon la revendication 5, caractérisé en ce que lesdits moyens de rattrapage d'usure comportent un élément de tige (65) s'étendant à travers ladite première extrémité dudit piston (50) qui est fixé audit cylindre (28'), et ledit moyen de rattrapage d'usure agit lors de la mise sous pression de ladite chambre de piston (55) afin de repousser lesdits disques (58, 59) à une distance nettement au-delà dudit cylindre (28') lors d'une usure sensible desdits disques de frein rotor et stator (44 à 47, 38 à 41).

7. Ensemble de frein selon l'une quelconque des revendications 1 à 6, caractérisé en ce que ledit disque extérieur (59) et ledit disque intérieur (58) sont chacun munis d'une partie annulaire (60, 61), ledit disque intérieur (58) étant porté par ledit piston (50) et la partie annulaire (61) dudit disque extérieur (59) étant reçue à l'intérieur de la partie annulaire (60) dudit disque intérieur (58).

8. Ensemble de frein selon l'une quelconque des revendications 1 à 6, caractérisé en ce que lesdits disques intérieur et extérieur (58, 59) sont formés comme des chapeaux intérieur et extérieur ayant respectivement des surfaces d'accouplement et des parties annulaires réduites (60, 61) reçues l'une par l'autre.

9. Ensemble de frein selon l'une quelconque des revendications 1 à 8, caractérisé en ce que lesdites surfaces d'accouplement sont des surfaces d'accouplement annulaires, convexe et concave, respectivement.

10. Ensemble de frein selon l'une quelconque des revendications 1 à 9, caractérisé en ce que ledit piston (50) est conçu comme un manchon allongé portant à sa première extrémité axiale une tête de piston (57) comprenant les disques intérieur et extérieur (58, 59).
